Europäisches Patentamt

European Patent Office

Office européen des brevets

(11) Veröffentlichungsnummer : **0 126 217**
**B1**

(12) **EUROPÄISCHE PATENTSCHRIFT**

(45) Veröffentlichungstag der Patentschrift :
12.11.86

(21) Anmeldenummer : 84101840.1

(22) Anmeldetag : 22.02.84

(51) Int. Cl.⁴ : **F 23 K  3/12**, F 23 G  7/10

(54) **Beschickungsvorrichtung für Stroh-Verbrennungsanlagen.**

(30) Priorität : 29.03.83 DE 3311415

(43) Veröffentlichungstag der Anmeldung :
28.11.84 Patentblatt 84/48

(45) Bekanntmachung des Hinweises auf die Patenterteilung : 12.11.86 Patentblatt 86/46

(84) Benannte Vertragsstaaten :
AT DE FR GB SE

(56) Entgegenhaltungen :
EP-A- 0 056 425
AT-B-  318 119
CH-A-  560 367
DE-A- 2 325 819
DE-A- 3 005 039
US-A- 3 855 950
SCHMIDT C., "Unterschubfeuerung für Abfallverbrennung", Zeitschrift BWK, Band 32, Oktober 1980, Nr.
10, VDI-VERLAG GMBH, Düsseldorf, Seiten 485,486

(73) Patentinhaber : GEBRÜDER WELGER GmbH & Co. KG
Gebrüder-Welger-Strasse 3
D-3340 Wolfenbüttel (DE)

(72) Erfinder : Simonis, Jürgen
Wielandweg 4
D-3340 Wolfenbüttel (DE)
Erfinder : Sacht, Hans-Otto, Dr.-Ing.
Hermann-Löns-Weg 18
D-3340 Wolfenbüttel (DE)

## Beschreibung

Die Erfindung betrifft eine Beschickungsvorrichtung für Stroh-Verbrennungsanlagen mit einem ersten Preßkanal, dem von einem Strohvorratsbehälter Stroh zugeführt wird, das ein erster Preßkolben zu einem Strohstrang verdichtet, den ein zweiter Preßkolben durch einen zweiten Preßkanal in einen Verbrennungsofen schiebt, und wobei eine mechanische Vorrichtung zum Absperren eines Preßkanals gegen Rückbrand vorgesehen ist.

Eine derartige Vorrichtung läßt sich aus der DE-A-3 005 039 entnehmen. Hierbei schert der erste Preßkolben eine Strohportion vorbestimmter Länge von einem Strohballen ab und preßt sie in den ersten Preßkanal. Der zweite Preßkolben ist dem ersten Preßkolben unmittelbar nachgeschaltet und schiebt die Strohportion durch den zweiten Preßkanal in den Verbrennungsofen. Am freien Ende des zweiten, in den Verbrennungsofen hineinragenden Preßkanales ist eine schwenkbare Fallklappe angeordnet. Während des Betriebes der Verbrennungsvorrichtung wird der Verbrennungsofen kontinuierlich mit Stroh beschickt, wobei die Fallklappe durch den austretenden Strohstrang ständig geöffnet gehalten wird und der Strohstrang am freien Ende des Preßkanales abbrennt. Erst wenn der vordere Teil des ausgeschobenen Strohs abgebrannt ist und kein weiteres Stroh nachgeschoben wird, dann fällt die Fallklappe unter Einwirkung der Schwerkraft zu und soll dadurch einen Rückbrand im Preßkanal verhindern. Beschickungsvorrichtungen dieser Art weisen erhebliche Sicherheitsrisiken und systembedingte Nachteile auf :

a) Die lediglich durch Schwerkraft betätigte Fallklappe gewährleistet aufgrund anhaftender Verbrennungsrückstände am Preßkanalende keine zuverlässige Absicherung gegen Rückbrand zwischen Strohvorratsbehälter und Verbrennungsofen. Bereits vor dem Schließen der Fallklappe brennt das Stroh im Preßkanal zurück in Richtung Strohvorratsbehälter.

b) Während des Rückhubes des zweiten Preßkolbens besteht eine freie Verbindung zwischen Strohvoratsbehälter und Verbrennungsofen. Fällt in dieser Stellung der Beschickungsvorrichtung deren Antreibsquelle aus, so erfolgt unausweichlich ein Rückbrand in den Strohvorratsbehälter.

c) Die Portionierung der Strohpackung im ersten Preßkanal ist vorbestimmt durch die Breite der Strohballen auf der Strohfördereinrichtung. Eine Abstimmung der Länge der einzelnen Strohpackung auf die Wärmeleistung des Verbrennungsofens ist nicht möglich. Der Strohstrang brennt je nach Vorschubgeschwindigkeit des zweiten Preßkolbens ungleichmäßig ab ; schlechte Wirkungsgrade und hohe Abgaswerte sind die Folge.

Ferner ist aus der US-A-3 855 950 eine Beschickungsvorrichtung zur automatischen Zuführung von Abfällen in einen Verbrennungsofen bekanntgeworden, die oberhalb eines Preßkanales mit einem darin hin- und herbewegbaren Preßkolben einen Vorratstrichter aufweist, durch den das Abfallmaterial aufgrund der Schwerkraft in den Preßkanal fällt und von dem Preßkolben in den Verbrennungsofen geschoben wird. Ist der Vorratstrichter nach mehrmaligen Hüben des Preßkolbens leer, so bleibt der Preßkolben in der hintersten Stellung stehen und ein Feuerschott wird zwischen Trichteröffnung und Verbrennungsofen in den Preßkanal hineingefahren. Zusätzlich wird die Einfüllöffnung im Preßkanal durch einen Schieber abgedeckt. Durch diese Einrichtungen soll erzielt werden, daß nur während des neuen Befüllens des Vorratstrichters kein Rückbrand zum Vorratstrichter möglich ist und keine Außenluft in den Verbrennungsofen eintritt. Solange der Vorratstrichter gefüllt ist, sind aber während der mehrmaligen Hübe des Preßkolbens Feuerschott und Schieber ständig geöffnet, so daß insbesondere während des Rückhubes des Preßkolbens sowohl atmosphärische Außenluft in den Verbrennungsofen gelangen kann als auch ein Rückbrand zum Vorratstrichter möglich ist. Die Beschickung des Verbrennungsofens erfolgt ohne vorhergehende Portionierung des in den Verbrennungsofen einzuschiebenden Abfalles.

Der Erfindung liegt die Aufgabe zugrunde, eine Beschickungsvorrichtung der eingangs erläuterten Art so auszubilden, daß zwischen Brennstoffvorratsbehälter und Verbrennungsofen bei jedem Preßkolbenhub eine sichere mechanische Abschottung gegen Rückbrand in den Brennstoffvorratsbehälter gewährleistet ist und gleichzeitig eine exakte Dosierung der in den Verbrennungsofen einzuschiebenden Brennstoffpackung ermöglicht wird.

Diese Aufgabe wird erfindungsgemäß dadurch gelöst, daß zwischen erstem Preßkanal und zweitem Preßkanal eine als Rückbrand- und Portioniereinrichtung ausgebildete Zellenschleuse angeordnet ist, deren Zelle bei Bewegung aus einer zum ersten Preßkanal koaxialen ersten Stellung in eine außerhalb des ersten Preßkanalquerschnittes und zum zweiten Preßkanal koaxial gelegenen zweiten Stellung mittels Schneiden eine Strohpackung vorbestimmter Länge von dem komprimierten Strohstrang abschert, wobei in der ersten Stellung der Zelle eine Absperrplatte den zweiten Preßkanal und in der zweiten Stellung eine weitere Absperrplatte den ersten Preßkanal verschließt.

Bei einer derartigen Anordnung bildet der erste Preßkolben im mit dem Strohvorratsbehälter verbundenen Preßkanal einen komprimierten Strohstrang, vom dem die Zelle der Zellenschleuse eine Packung vorbestimmter Länge abschert und an den zweiten Preßkanal übergibt. Der zweite Preßkolben erzeugt in dem in den Verbrennungsofen führenden Preßkanal einen zweiten komprimierten Strohstrang bestehend aus einzelnen Strohpackungen gleicher Länge. Durch die Trennung der Preßkanäle und die Zwischenschaltung der Zellenschleuse läßt sich die Schleusenaustrittsöffnung während des Betriebs des ersten Preßkolbens durch eine Absperrplatte verschließen und die Schleuseneintrittsöffnung während des Einschiebens der Strohpackung durch den zweiten Preßkolben in den Verbrennungsofen ebenfalls durch eine Absperrplatte absperren, wodurch zu jedem Zeitpunkt des Betriebs eine sichere mechanische Trennung der beiden Stränge gewährleistet und ein Rückbrand zum Vorratsbehälter unmöglich ist. Ein weiterer Vorteil besteht darin, daß bei Ausfall der Antriebsquelle und damit verbundenem plötzlichen Stillstand von Preßkolben oder Zellenschleuse unabhängig von der Stellung stets eine mechanische Trennung zwischen Vorratsbehälter und Verbrennungsofen gewährleistet ist. Ferner läßt sich durch Bemessung der Zellenlänge exakt die Länge der Packung bestimmen und begrenzen, welche die Zelle von dem komprimierten Strohstrang abschert. Die Packungslänge kann unabhängig von den angelieferten Abmessungen der Strohballen optimal auf die Wärmeleistung des Ofens abgestimmt werden. Die Zuführung einzelner und gleichmäßiger Packungen ist für eine störungsfreie, gleichmäßige Verbrennung mit gutem Wirkungsgrad von entscheidender Bedeutung.

Eine günstige Ausgestaltung der Erfindung wird dadurch erreicht, daß die Preßkolben in Längsrichtung des zugehörigen Preßkanales hin- und herbewegbar sind, und daß der Abstand zwischen den Querschnitten der Preßkanäle größer ist als der Zellenquerschnitt und der Zelleninnendurchmesser größer als der Außendurchmesser der Preßkolben ist. Auf diese Weise wird mit geringem konstruktiven Aufwand ermöglicht, daß der Zellenquerschnitt bei Bewegung der Zelle aus der ersten in die zweite Stellung erst dann beginnt den zweiten Preßkanalquerschnitt zu überdecken, wenn er außerhalb des ersten Preßkanalquerschnittes ist, so daß zu keinem Zeitpunkt beide Preßkanalquerschnitte gleichzeitig vom Zellenquerschnitt überdeckt werden. Die Ausführung der Preßkanäle mit darin hin- und herbewegbarem Preßkolben hält den Bauaufwand gering bei zuverlässiger Funktion.

In weiterer Ausgestaltung der Erfindung ist vorgesehen, daß der erste Preßkolben in der ersten Stellung der Zellenschleuse in eine einseitig zum ersten Preßkanal hin offene Zelle preßt, und daß die Zelle in ihrer zweiten Stellung eine freien Durchgang für den zweiten Preßkolben bildet, wobei der Hub des ersten Preßkolbens wesentlich größer und der Hub des zweiten Preßkolbens nur geringfügig größer als die Zellenlänge bemessen ist. Der längere Hub des ersten Preßkolbens ist notwendig, um das relativ lose Stroh zu einem komprimierten Strohstrang zu verdichten, während der Hub des zweiten Preßkolbens den aus einzelnen gleichlangen Packungen bestehenden Strang im zweiten Preßkanal jeweils um eine Packungslänge vorschiebt, bis an dem freien Ende des Preßkanals die jeweils vorderste Packung in den Verbrennungsofen gelangt.

Die Erfindung schlägt ferner vor, daß die Zellenschleuse zwei Zellen aufweist und zwei zweite Preßkolben vorgesehen sind. Auf diese Weise können von einem Strohvorratsbehälter und nur einem zur Zellenschleuse führenden Preßkanal gleichzeitig entweder mehrere Verbrennungsöfen oder ein Verbrennungsofen doppelt zur Erhöhung der Wärmeleistung beschickt werden.

Weitere vorteilhafte Weiterbildungen sind in den Unteransprüchen dargelegt.

Ein Ausführungsbeispiel der Erfindung ist in der Zeichnung dargestellt und wird im folgenden näher beschrieben. Es zeigt:

Figur 1 eine perspektivische Gesamtansicht einer Beschickungsvorrichtung in Ausgangsstellung vor dem Beschicken eines Verbrennungsofens.

Figur 2 einen Schnitt nach Linie A-B in Fig. 1 bei abgeschnittenem ersten Preßkanal und weggelassenem Strohvorratsbehälter und Verbrennungsofen in erster Stellung der Zelle der Zellenschleuse.

Figur 3 eine Ansicht nach Fig. 2 während des Beschickens in zweiter Stellung der Zelle der Zellenschleuse.

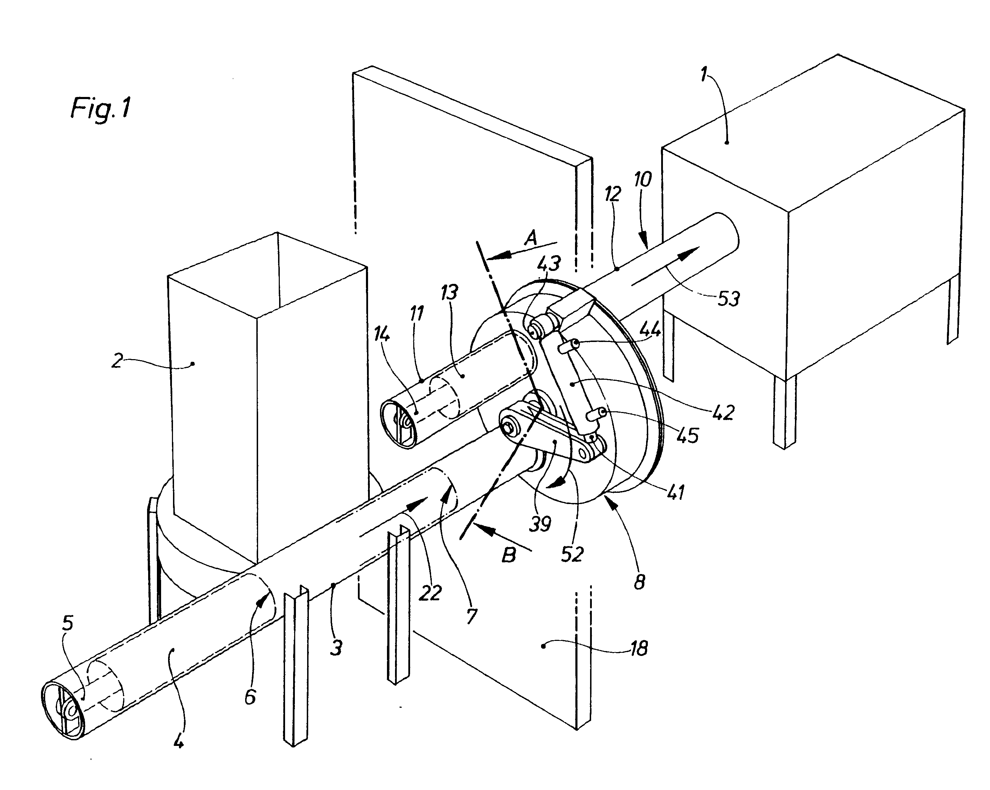

In Fig. 1 ist mit 1 ein Verbrennungsofen bezeichnet, wie er beispielsweise in der DE-A-31 26 419 näher beschrieben und dargestellt ist.

Seitlich an den Strohvorratsbehälter 2 schließt sich ein erster Preßkanal 3 an. In dem Preßkanal 3 ist ein Preßkolben 4 mittels eines doppelt beaufschlagbaren Hydraulikzylinders 5 zwischen einer hinteren Kolbenstellung 6 und einer vorderen, in Fig. 1 in strichpunktierter Linie dargestellter Kolbenstellung 7 hin- und herbewegbar. Das dem Preßkolben 4 gegenüberliegende Preßkanalende mündet in die untere Hälfte einer zylindrischen Zellenradschleuse 8, deren Mittelachse 9 parallel zum Preßkanal 3 verläuft.

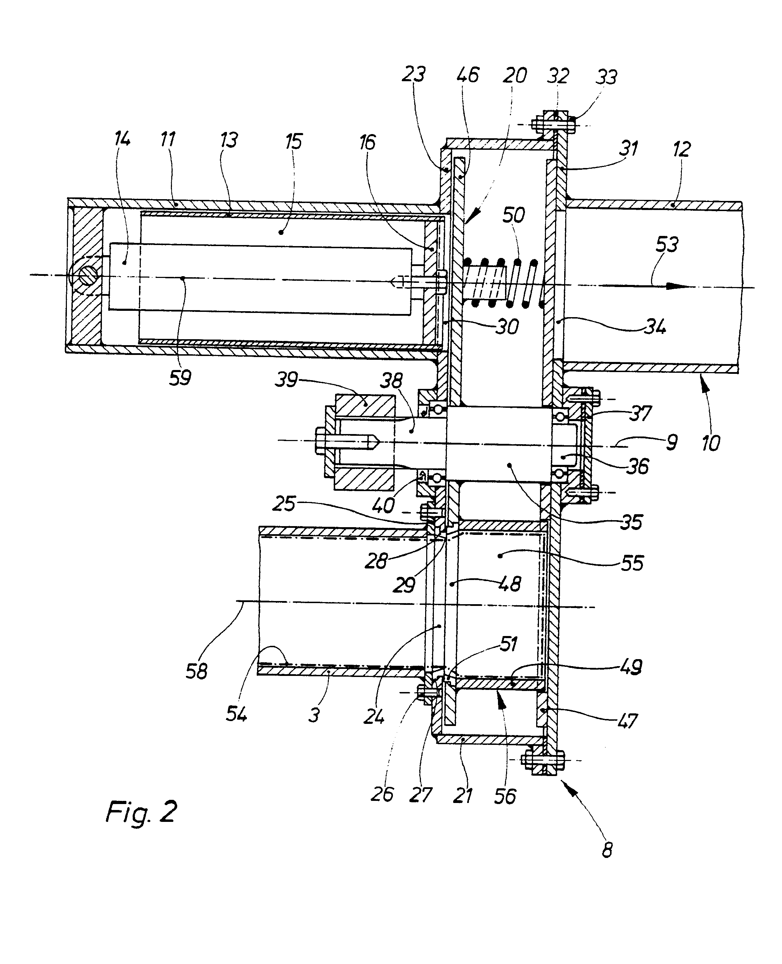

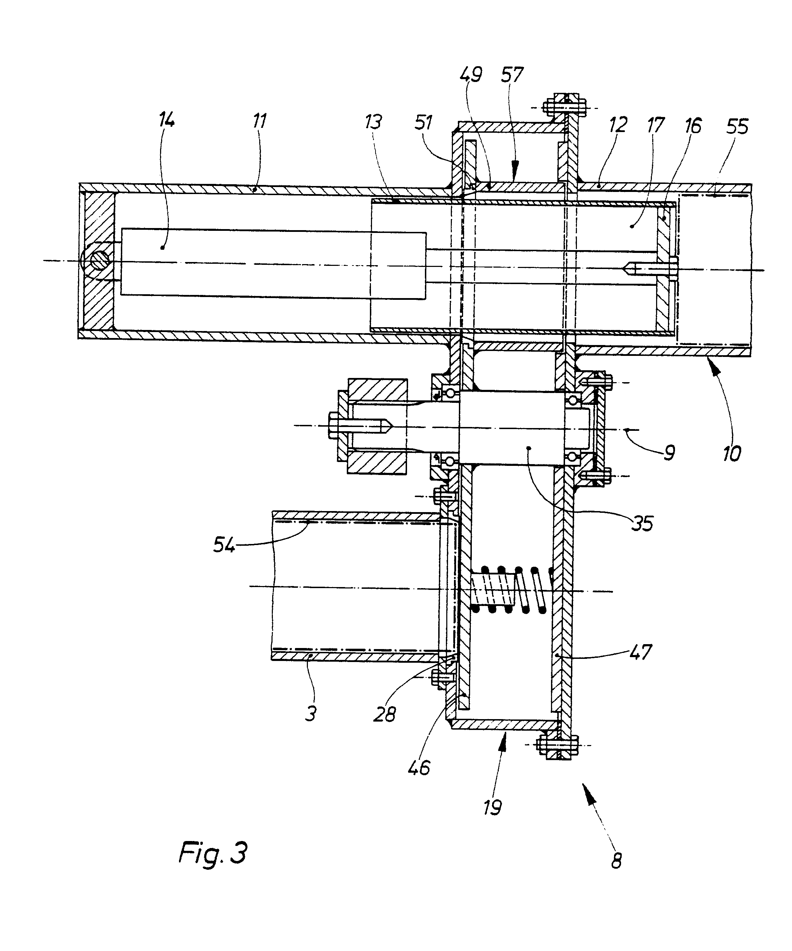

Oberhalb und parallel zum Preßkanal 3 ist ein zweiter Preßkanal 10 angeordnet. Der Abstand zwischen den Mittelachsen 58, 59 der Preßkanäle 3, 10 ist größer als die Summe der beiden Preßkanaldurchmesser. Der Preßkanal 10 besteht aus einem hinteren Abschnitt 11 und einem vorderen Abschnitt 12. Zwischen den Abschnitten 11, 12 ist die Zellenradschleuse 8 angeordnet. Der hintere Abschnitt 11 mündet auf der gleichen Seite wie der Preßkanal 3, jedoch in der oberen Hälfte in die Zellenradschleuse 8 und hat den gleichen Durchmesser wie der Preßkanal 3. Der vordere Abschnitt 12 verläuft koaxial zum hinteren Abschnitt 11, schließt sich auf der anderen Seite der Zellenradschleuse 8 an diese an und führt zum Verbrennungsofen 1. Der Durchmesser des vorderen Abschnittes 12 ist etwas größer bemessen als der des hinteren Abschnittes 11. In dem hinteren Abschnitt 11 ist ein Preßkolben 13 angeordnet, der mittels eines doppelt beaufschlagbaren Hydraulikzylinders 14 zwischen einer hinteren Kolbenstellung 15 (Fig. 1, 2), in der die Kolbenstirnseite 16 außerhalb der Zellenschleuse 8 liegt, und einer vorderen Kolbenstellung 17 (Fig. 3), in der die Kolbenstirnseite 16 im vorderen Abschnitt 12 liegt, hin- und herbewegbar ist.

Der Verbrennungsofen 1 ist in einem gesonderten Raum untergebracht und der Strohvorratsbehälter 2 wird ebenfalls in einem eigenen Raum aufgestellt, wobei der Preßkanal 3 und der hintere Abschnitt 11 des Preßkanals 10 durch eine Trennwand 18 (Mauer) hindurchgeführt sind, die die beiden Räume brandsicher voneinander trennt und die Zellenradschleuse als Brandsicherung außerhalb des Strohlagerraumes liegt.

Im folgenden ist die Zellenradschleuse 8 und deren Antrieb beschrieben.

Die Zellenradschleuse 8 besteht aus einem Gehäuse 19 und einem in dem Gehäuse drehbar gelagerten Zellenrad 20.

Das Gehäuse 19 wird von einem Zylinderraum mit horizontaler Mittelachse 9 gebildet, dessen Zylindermantel 21 auf seinem ganzen Umfang die Querschnitte der Preßkanäle 3, 10 umschließt. Die in Förderrichtung 22 des Preßkolbens 4 gemessene Länge des Zylindermantels 21 wird in einem späteren Abschnitt beschrieben. Eine hintere Stirnwand 23 ist an den Zylindermantel 21 geschweißt und weist seitlich von der Mittelachse 9 und nach unten versetzt eine untere, dem Querschnitt des Preßkanals 3 entsprechende Eintrittsöffnung 24 für das Material auf. Das Ende des Preßkanals 3 ist über einen Flansch 25 mittels Schrauben 26 an der Stirnwand 23 befestigt. Zwischen Flansch 25 und Stirnwand 23 ist in einer Umfangsnut 27 der Stirnwand 23 ein als Schneide ausgebildeter, gehärteter Schneidfederring 28 angeordnet. Der Schneidfederring 28 weist eine Kante 29 auf, die in Förderrichtung 22 verjüngend verläuft, wobei der kleinste Durchmesser des Schneidfederringes 28 dem Durchmesser des Preßkolbens 4 entspricht und die Breite des Schneidfederringes 28 innerhalb der Dicke der Stirnwand 23 liegt. Der Schneidfederring 28 ist auf seinem Umfang an einer Stelle unterbrochen ausgeführt und kann durch Zusammendrücken aus der Nut 27 zum Auswechseln nach Verschleiß entnommen werden. Oberhalb der Eintrittsöffnung 24 ist gegenüber der Mittelachse 29 seitlich und nach oben um das gleiche Maß wie die Eintrittsöffnung 24 versetzt in der Stirnwand 23 eine obere, dem Querschnitt des Preßkolbens 13 entsprechende Durchtrittsöffnung 30 für den Preßkolben 13 angeordnet. Am Rand der Durchtrittsöffnung 30 ist das Ende des hinteren Abschnittes 11 des Preßkanals 10 befestigt. Im Abstand zur hinteren Stirnwand 23 ist eine vordere Stirnwand 31 unter Zwischenlage einer Dichtung 32 mittels Schrauben 33 am Außenrand des Zylindermantels 21 befestigt. In der oberen Hälfte der vorderen Stirnwand 31 ist eine dem Querschnitt des vorderen Preßkanalabschnittes 12 entsprechende Austrittsöffnung 34 für das Material angebracht, an die sich der vordere Preßkanalabschnitt 12 anschließt.

Das Zellenrad 20 wird von einer Welle 35 getragen, die koaxial zur Mittelachse 9 des Zylinderraumes verläuft. Ein vorderes Wellenende 36 durchsetzt die vordere Stirnwand 31, endet kurz hinter dieser und ist in der Stirnwand 31 über ein Wälzlager gelagert. Eine Abdeckplatte 37 verschließt die Lagerstelle nach außen luftdicht. Ein freies, hinteres Wellenende 38 durchsetzt die hintere Stirnwand 23, ist über ein Wälzlager in der Stirnwand 23 gelagert und erstreckt sich nach außen wesentlich über die Stirnwand 23 hinaus. Eine Kurbel 39 ist über eine Kerbverbindung auf dem Wellenende 38 befestigt, so daß keine Verdrehung zwischen Kurbel und Welle möglich ist. Zwischen Stirnwand 23 und Wellenende 38 ist eine Dichtung 40 eingesetzt, so daß das gesamte Gehäuse 19 gegen Austritt von Gasen, die vom Verbrennungsofen 1 zurückströmen können, nach außen abgeschirmt ist. Am freien Ende der Kurbel 39 greift eine Kolbenstange 41 eines doppelt beaufschlagbaren Hydraulikzylinders 42 an, dessen Anlenkung auf der Zylinderseite an einem Zapfen 43 erfolgt, der auf dem Zylindermantel 21 aufgeschweißt ist. Die beiden Anschlüsse des Hydraulikzylinders sind durch die Zahlen 44, 45 gekennzeichnet.

Die Welle 35 trägt im Innern des Gehäuses 19 zwei Absperrplatten 46, 47. Jede Absperrplatte ist als Scheibe ausgebildet, deren Durchmesser geringfügig kleiner ist als der Innendurchmesser des Zylindermantels 21. Die Absperrplatte 46 ist dicht benachbart zur hinteren Stirnwand 23 auf der Welle 35 befestigt und weist eine Öffnung 48 auf, die etwas größer als die Eintrittsöffnung 24 und mit dieser deckungsgleich ist. An diese Öffnung 48 schließt sich eine aus einem Rohr hergestellte Zelle 49 an, deren Innendurchmesser geringfügig größer als der Innendurchmesser des Preßkanals 3 ist und die sich von der Absperrplatte 46 bis zur vorderen Stirnwand 31 erstreckt. Die Zelle 49 ist am Rand der Öffnung 48 angeschweißt. Zwischen Zelle 49 und Absperrplatte 46 ist ein Schneidfederring 51 angeordnet, der mit dem Schneidfederring 28 zusammenwirkt und in gleicher Weise wie dieser, jedoch in spiegelbildlicher Anordnung in die Absperrplatte 46 eingesetzt ist. Die Absperrplatte 47 ist so ausgebildet, daß sie verschiebbar auf der Welle 35 und der Zelle 49 ist und wird von mehreren Druckfedern 50, die sich auf der Absperrplatte 46 abstützen, gegen die vordere Stirnwand 31 gepreßt. Die Zellenlänge wird in Abhängigkeit von der Wärmeleistung des Verbrennungsofens 1 gewählt und bestimmt auch die Länge des Gehäuses 19.

Die Arbeitsweise der Vorrichtung ist wie folgt :

Aus dem Strohvorratsbehälter 2 wird dem ersten Preßkanal 3 relativ loses Stroh zugeführt, daß der erste Preßkolben 4 beim Vorhub in Förderrichtung 22 transportiert und dabei aufgrund der Reibung zwischen Stroh und Preßkanalwand zu einem Strohstrang 54 verdichtet, der in strichpunktierter Linie in Fig. 2 dargestellt ist.

Während des Vorhubes des Preßkolbens 4 befindet sich die Zelle 49 in ihrer ersten Stellung 56 (Fig. 2) in der der Zellenquerschnitt und der Eintrittsöffnungsquerschnitt deckungsgleich sind. Die Absperrplatte 47 verschließt die Austrittsöffnung 34. Der Preßkolben 4 beginnt etwa um eine Zellenlänge vor Erreichen seiner vorderen Kolbenstellung 7 (Fig. 1), den Strohstrang 54 in die Zelle 49 zu schieben. In der vorderen Kolbenstellung 7 preßt der Kolben 4 den Strohstrang 54 gegen die vordere Stirnwand 31 (Fig. 2). Der Preßkolben 4 wird in dieser Stellung 7 gehalten, um eine Reexpansion des Strohstranges 54 zu verhindern. Der Preßkolben 4 löst nun die Bewegung des Zellenrades 20 aus, das sich in Richtung des Pfeiles 52 (Fig. 1) dreht. Dabei scheren die Schneidfederringe 28, 51 (Fig. 2) eine Strohpackung 55 von dem Strohstrang 54 ab, während die Austrittsöffnung 34 durch die Absperrplatte 47 verschlossen bleibt und die Absperrplatte 46 beginnt die Eintrittsöffnung 24 zu verschließen. Erst wenn der Zellenquerschnitt vollständig außerhalb des ersten Preßkanals 3 liegt, beginnt der Zellenquerschnitt den zweiten Preßkanal 10 zu überschneiden. In der durch Endschalter begrenzten zweiten Stellung 57 (Fig. 3) der Zelle 49, verschließt die Absperrplatte 46 vollständig die Eintrittsöffnung 24. Der Vorhub des zweiten Preßkolbens 13 wird nun von dem Zellenrad 20 ausgelöst. Der Preßkolben 13 bewegt sich in Richtung des Pfeiles 53 und schiebt die Strohpackung 55 in den zweiten Preßkanal 10. Die Strohpackung 55 kann aufgrund des etwas größeren Durchmessers des vorderen Preßkanalabschnittes 12 etwas in radialer Richtung expandieren. Die Stufe zwischen Austrittsöffnung 34 und Preßkanal 10 verhindert jedoch eine Reexpansion entgegen der Pfeilrichtung 53. Hat der Preßkolben 13 seine vordere Stellung 17 erreicht, wird die Bewegung umgekehrt und der Preßkolben 13 fährt zurück in seine hintere Stellung 15. Während dieser Bewegung fährt auch der erste Preßkolben 4 in seine hintere Stellung 6. Sind beide Preßkolben 4, 13 in ihren hinteren Stellungen 6, 15 (Fig. 1, 2), wird die Zurückbewegung des Zellenrades 20 ausgelöst, die sich nun entgegen der Richtung des Pfeiles 53 in ihre erste Stellung 56 bewegt.

Nachdem dem ersten Preßkanal 3 erneut Stroh zugeführt wurde, beginnt ein neuer Zyklus. Im eingefahrenen Zustand der Anlage wird bei jedem Zyklus eine Strohpackung 55 gleicher Länge in den Verbrennungsofen 1 geschoben.

## Patentansprüche

1. Beschickungsvorrichtung für Stroh-Verbrennungsanlagen mit einem ersten Preßkanal (3), dem von einem Strohvorratsbehälter (2) Stroh zugeführt wird, das ein erster Preßkolben (4) zu einem Strohstrang (54) verdichtet, den ein zweiter Preßkolben (13) durch einen zweiten Preßkanal (10) in einen Verbrennungsofen (1) schiebt, und wobei eine mechanische Vorrichtung zum Absperren eines Preßkanals gegen Rückbrand vorgesehen ist, dadurch gekennzeichnet, daß zwischen erstem Preßkanal (3) und zweitem Preßkanal (10) eine als Rückbrand- und Portioniereinrichtung ausgebildete Zellenschleuse (8) angeordnet ist, deren Zelle (49) bei Bewegung aus einer zum ersten Preßkanal (3) koaxialen ersten Stellung (56) in eine außerhalb des ersten Preßkanalquerschnittes und zum zweiten Preßkanal (10) koaxial gelegenen zweiten Stellung (57) mittels Schneiden (28, 51) eine Strohpackung (55) vorbestimmter Länge von dem komprimierten Strohstrang (54) abschert, wobei in der ersten Stellung (56) der Zelle (49) eine Absperrplatte (47) den zweiten Preßkanal (10) und in der zweiten Stellung (57) eine weitere Absperrplatte (46) den ersten Preßkanal (3) verschließt.

2. Beschickungsvorrichtung nach Anspruch 1, dadurch gekennzeichnet, daß die Preßkolben (4, 13) in Längsrichtung des zugehörigen Preßkanales (3, 10) hin- und herbewegbar sind, und daß der Abstand zwischen den Querschnitten der Preßkanäle (3, 10) größer ist, als der Zellenquerschnitt und daß der Zelleninnendurchmesser größer als der Außendurchmesser der Preßkolben (4, 13) ist.

3. Beschickungsvorrichtung nach Anspruch 1 oder 2, dadurch gekennzeichnet, daß der erste Preßkolben (4) in der ersten Stellung (56) der Zellenschleuse (8) in eine einseitig zum ersten Preßkanal (3) hin offene Zelle (49) preßt, und daß die Zelle (49) in ihrer zweiten Stellung (57) einen freien Durchgang für den zweiten Preßkolben (13) bildet, wobei der Hub des ersten Preßkolbens (4) wesentlich größer und der Hub des zweiten Preßkolbens (13) nur geringfügig größer als die Zellenlänge bemessen ist.

4. Beschickungsvorrichtung nach einem der Ansprüche 1 bis 3, dadurch gekennzeichnet, daß die die einzelne Packungslänge bestimmende Länge der Zelle (49) der Wärmeleistung des Verbrennungsofens (1) angepaßt ist.

5. Beschickungsvorrichtung nach einem der Ansprüche 1 bis 4, dadurch gekennzeichnet, daß die Zelle (49) von den zwei im Abstand angeordneten Absperrplatten (46, 47) aufgenommen wird, die in einem Gehäuse (19) gemeinsam bewegbar gelagert sind.

6. Beschickungsvorrichtung nach einem der Ansprüche 1 bis 5, dadurch gekennzeichnet, daß die Zellenschleuse (8) als hin- und herdrehbar angetriebene Zellenradschleuse ausgebildet ist.

7. Beschickungsvorrichtung nach einem der Ansprüche 1 bis 5, dadurch gekennzeichnet, daß die Zellenschleuse (8) als hin- und herbewegbar angetriebener Zellenschieber ausgebildet ist.

8. Beschickungsvorrichtung nach einem der Ansprüche 1 bis 7, dadurch gekennzeichnet, daß die Hin- und Herbewegung der beiden Preßkolben (4, 13) und der Zellenschleuse (8) durch je einen beidseitig beaufschlagbaren Hydraulikzylinder (5, 14, 42) erzeugt wird.

9. Beschickungsvorrichtung nach einem der Ansprüche 1 bis 8, dadurch gekennzeichnet, daß die Steuerung der Bewegung der Zellenschleuse (8) von dem ersten Preßkolben (4) abgeleitet ist und die Zellenschleuse (8) den Vorhub des zweiten Preßkolbens (13) steuert, während dieser seinen Rückhub selbst auslöst.

10. Beschickungsvorrichtung nach einem der Ansprüche 1 bis 9, dadurch gekennzeichnet, daß die Zellenschleuse (8) zwei Zellen (49) aufweist und zwei zweite Preßkolben (13) vorgesehen sind.

## Claims

1. Feeding device for straw combustion apparatus, with a first pressure channel (3) to which straw is conveyed from a straw storage container (2) which straw is compressed by a first press plunger (4) to a billet of straw (54), which a second press plunger (13) pushes through a second pressure channel (10) into a combustion furnace (1), and wherein a mechanical device is provided to shutt off a pressure channel against burn-back, characterised in that between the first pressure channel (3) and the second pressure channel (10), a celled lock (8) is arranged, which is constructed as a burn-back and portioning installation, and the cell (49) of which on moving out of a first position (56) coaxial to the first pressure channel (3) into a second position (57) situated outside the first pressure channel cross-section and coaxially to the second pressure channel (10), shears off a straw packet (55) of predetermined length from the compressed billet of straw (54) by means of cutters (28, 51), whereby in the first position (56) of the cell (49) a shut-off plate (47) closes the second pressure channel (10) and in the second position (57) a further shutt-off plate (46) closes the first pressure channel (3).

2. Feeding device according to Claim 1, characterised in that the press plungers (4, 13) are movable back and forth in the longitudinal direction of the associated pressure channel (3, 10), and that the distance between the cross-sections of the pressure channels (3, 10) is greater than the cell cross-section and that the internal diameter of the cell is greater than the external diameter of the press plungers (4, 13).

3. Feeding device according to Claim 1 or 2, characterised in that the first press plunger (4) in the first position (56) of the celled lock (8) presses into a cell (49) which is open to one side to the first pressure channel (3), and that the cell (49) in its second position (57) forms a free passage for the second press plunger (13), whereby the stroke of the first press plunger (4) is substantially greater, and the stroke of the second press plunger (13) only slightly greater than the cell length.

4. Feeding device according to one of Claims 1 to 3, characterised in that the length of the cell (49), which determines the length of the individual packet, is adapted to the thermal efficiency of the combustion furnace (1).

5. Feeding device according to one of Claims 1 to 4, characterised in that the cell (49) is received by the two shut-off plates (46, 47) which are spaced apart, and which are mounted so as to be jointly movable in a housing (19).

6. Feeding device according to one of Claims 1 to 5, characterised in that the celled lock (8) is constructed as a celled wheel lock which is driven so as to be rotatable back and forth.

7. Feeding device according to one of Claims 1 to 5, characterised in that the celled lock (8) is constructed as a celled slide valve which is driven so as to be movable back and forth.

8. Feeding device according to one of Claims 1 to 7, characterised in that the back and forth movement of the two press plungers (4, 13) and of the celled lock (8) is produced in each case by a hydraulic cylinder (5, 14, 42) which is able to be acted upon on both sides.

9. Feeding device according to one of Claims 1 to 8, characterised in that the control of the movement of the celled lock (8) is derived from the first press plunger (4) and the celled lock (8) controls the pre-stroke of the second press plunger (13), whilst the latter initiates its return stroke itself.

10. Feeding device according to one of Claims 1 to 9, characterised in that the celled lock (8) has two cells (49) and two second press plungers (13) are provided.

## Revendications

1. Equipement d'alimentation pour appareils de combustion de paille, comportant un premier canal de pressage (3) auquel on amène, depuis un réservoir de paille (2), de la paille qu'un premier piston de pressage (4) comprime en un boudin de paille (54), qu'un second piston de pressage (13) pousse par un second canal de pressage (10) dans un four de combustion (1), tandis qu'il est prévu un dispositif mécanique pour obturer un canal de pressage à l'égard d'une remontée de flamme, caractérisé en ce qu'entre le premier canal de pressage (3) et le second canal de pressage (10) est disposée une écluse cellulaire (8) qui est conçue sous forme de dispositif de préportionnement interdisant les remontées de flamme, dont la cellule (49) lors d'un déplacement pour passer d'une première position (56), coaxiale au premier canal de pressage (3), à une seconde position (57) extérieure à la section transversale du premier canal de pressage et coaxiale au second canal de pressage (10), détache du boudin de paille comprimée, par cisaillage au moyen de lames (28, 51), un paquet de paille (55) de longueur prédéterminée, tandis que, dans la première position (56) de la cellule (49), un plateau obturateur (47) obture le second canal de pressage (10) et que, dans la seconde position (57), un autre plateau obturateur (56) obture le premier canal de pressage (3).

2. Equipement d'alimentation selon la revendication 1, caractérisé en ce que les pistons de pressage (4, 13) sont mobiles en va-et-vient selon la direction longitudinale du canal de pressage correspondant (3, 10) ; en ce que la distance entre les sections transversales des canaux de pressage (3, 10) est supérieure à la section transversale de la cellule ; et en ce que le diamètre intérieur de la cellule est supérieur au diamètre extérieur des pistons de pressage (4, 13).

3. Equipement d'alimentation selon la revendication 1 ou 2, caractérisé en ce que dans la première position (56) de l'écluse cellulaire (8), le premier piston de pressage (4) presse dans une cellule (49) ouverte d'un seul côté en direction du premier canal de pressage (3) ; et en ce que la cellule (49), dans sa seconde position (57), forme un passage libre pour le second piston de pressage (13), tandis que la course du premier piston de pressage (4) est significativement supérieure à la longueur de la cellule et que la course du second piston de pressage (13) n'est que légèrement supérieure à la longueur de la cellule.

4. Equipement d'alimentation selon l'une des revendications 1 à 3, caractérisé en ce que la longueur de la cellule (49), qui détermine la longueur de chaque paquet, est adaptée à la puissance thermique du four de combustion (1).

5. Equipement d'alimentation selon l'une des revendications 1 à 4, caractérisé en ce que la cellule (49) est reçue par les deux plateaux obturateurs (46, 47) qui sont disposés à distance l'un de l'autre et qui sont montés ensemble de manière déplaçable dans un carter (19).

6. Equipement d'alimentation selon l'une des revendications 1 à 5, caractérisé en ce que l'écluse cellulaire (8) est conçue sous forme d'écluse à rotor cellulaire entraînée en va-et-vient rotatif.

7. Equipement d'alimentation selon l'une des revendications 1 à 5, caractérisé en ce que l'écluse cellulaire (8) est conçue sous forme de tiroir cellulaire mobile en va-et-vient.

8. Equipement d'alimentation selon l'une des revendications 1 à 7, caractérisé en ce que les mouvements de va-et-vient des deux pistons de pressage (4, 13) et de l'écluse cellulaire (8) sont produits chacun par un vérin hydraulique à double effet (5, 14, 42).

9. Equipement d'alimentation selon l'une des revendications 1 à 8, caractérisé en ce que la commande du mouvement de l'écluse cellulaire (8) est déclenchée par le premier piston de pressage (4) ; et en ce que l'écluse cellulaire (8) commande la course vers l'avant du second piston de pressage (13), tandis que celui-ci déclenche lui-même son retour.

10. Equipement d'alimentation selon l'une des revendications 1 à 9, caractérisé en ce que l'écluse cellulaire (8) présente deux cellules (49) et en ce qu'il est prévu deux seconds pistons de pressage (13).

Fig.1

Fig. 2

Fig. 3